Europäisches Patentamt

European Patent Office

Office européen des brevets

(19)

(11) **EP 0 533 577 B1**

(12) **FASCICULE DE BREVET EUROPEEN**

(45) Date de publication et mention
de la délivrance du brevet:
**07.05.1997 Bulletin 1997/19**

(51) Int Cl.⁶: **H01M 4/82**, H01M 4/64,
H01M 10/40, H01M 6/18

(21) Numéro de dépôt: **92402563.8**

(22) Date de dépôt: **17.09.1992**

(54) **Collecteurs de courant pour générateurs électrochimiques sécuritaires, procédés de préparation et générateurs obtenus**

Stromableiter für elektrochemischen Sicherheits-Generatoren, Verfahren zur Herstellung, und daraus erhaltene Generatoren

Current collectors for safe electrochemical generators, production process and generators obtained therefrom

(84) Etats contractants désignés:
**AT BE CH DE DK ES FR GB GR IE IT LI LU MC NL PT SE**

(30) Priorité: **17.09.1991 CA 2051614**

(43) Date de publication de la demande:
**24.03.1993 Bulletin 1993/12**

(73) Titulaire: **HYDRO-QUEBEC**
**Montréal Québec H2Z 1A4 (CA)**

(72) Inventeurs:
• **Boissonneault, Réal**
**Trois-Rivières, Québec G8Y 2N6 (CA)**
• **Gauthier, Michel**
**La Prairie, Québec J5R 1E6 (CA)**
• **St-Amant, Guy**
**Trois-Rivières ouest, Québec G8Y 6N7 (CA)**
• **Choquette, Yves**
**Ste-Julie, Québec J3E 1P4 (CA)**

(74) Mandataire: **Schrimpf, Robert**
**Cabinet Regimbeau**
**26, Avenue Kléber**
**75116 Paris (FR)**

(56) Documents cités:
US-A- 4 283 844        US-A- 4 477 485
US-A- 4 916 036        US-A- 4 978 601

• PATENT ABSTRACTS OF JAPAN vol. 5, no. 15 (E-43)(687) 29 Janvier 1981

## Description

La présente invention concerne des collecteurs de courant pour générateurs électrochimiques sécuritaires, leurs procédés de préparation et les générateurs obtenus en se servant de ces collecteurs de courant. Plus précisément, la présente invention concerne des collecteurs de courant, à collection latérale, constitués d'un revêtement conducteur supporté sur un film plastique isolant, caractérisé en ce que le revêtement métallique supporté est divisé en une multitude de plages conductrices isolées des plages adjacentes mais reliées entre elles par une marge conductrice commune reliée au moyen de ponts conducteurs capables de limiter ou d'interrompre le courant total reçu par une plage donnée, en provenance de l'ensemble du générateur, lorsque cette dernière est en situation de court-circuit. L'invention comprend également un procédé de réalisation de tels collecteurs et des générateurs réalisés avec ces derniers.

Les générateurs primaires ou rechargeables à grandes densités d'énergie sont susceptibles d'atteindre, en cas de décharge rapide accidentelle, des conditions de température et éventuellement de pression telles que l'accumulateur peut dans certains cas extrêmes devenir dangereux et même exploser. Même si ces conditions extrêmes ne sont pas toujours atteintes, des dommages permanents peuvent en résulter pour le générateur.

Ce type de problème s'est accentué avec l'avènement des générateurs au lithium, utilisant généralement des électrolytes liquides et parfois des cathodes solubles. Ces générateurs contiennent suffisamment d'énergie pour que certains designs, dans des conditions de courts-circuits majeurs, subissent une hausse de température interne de quelques centaines de degrés. L'ébullition de l'electrolyte et surtout, la réaction chimique du lithium avec ce dernier ou avec la cathode, peut alors devenir brusque et explosive à température élevée, particulièrement lorsque la température dépasse le point de fusion du lithium, vers 180°C. Cette situation est particulièrement grave pour des générateurs au lithium rechargeables où la surface de contact et la réactivité du lithium avec l'electrolyte liquide augmentent sensiblement avec le nombre de cycles de recharge.

Diverses solutions ont été proposées pour contrôler ces problèmes de sécurité: utilisation de fusibles pour interrompre ou limiter le courant en cas de courts-circuits externes, remplacement du lithium métallique fusible par des alliages ou composés d'insertion, tel que $LiC_6$, peu fusibles.

La protection de ces générateurs vis-à-vis de courts-circuits internes est plus difficile à réaliser. Une solution élégante a été proposée dans le cas des générateurs au lithium, brevet européen numéro 0 246 866. Cette protection repose sur la capacité de la membrane plastique poreuse contenant l'électrolyte du séparateur, de se fusionner à partir d'une température choisie en-dessous de la température jugée critique.

La présente invention concerne principalement des générateurs au lithium, à l'état solide, utilisant des films minces d'électrodes, d'électrolyte et de collecteurs mis en oeuvre, préférentiellement avec des procédés continus et dont l'épaisseur totale varie le plus souvent entre 200 et 5 microns. Les électrolytes polymères sont déjà considérés intrinsèquement comme étant plus sécuritaires à cause de l'état solide et de leur capacité à limiter les échanges rapides de matières entre l'électrolyte et les électrodes; d'autre part, ces derniers se prêtent particulièrement bien à la mise en oeuvre des collecteurs de la présente invention.

L'invention s'adresse plus particulièrement à des collecteurs de courants destinés à des générateurs en films minces qui nécessitent le développement de piles de grandes surfaces. Ces générateurs seront le plus souvent assemblés sous forme d'enroulements ou empilements et doivent être collectés latéralement du fait de la longueur des films à mettre en jeu pour stocker des capacités appréciables d'énergie de puissance. Ces conditions interdisent à toute fin pratique la collection des courants d'électrodes par l'extrémité du collecteur d'électrode.

Les collecteurs de la présente invention visent donc à améliorer le caractère sécuritaire de ces types de générateurs au lithium. Ils ont pour but de limiter la chaleur générée dans ces derniers, en cas de court-circuit interne, en limitant temporairement ou définitivement les courants maximum de court-circuit provenant de l'ensemble du générateur. Cette limitation est obtenue en divisant la surface d'au moins un des collecteurs du générateur en une multitude de plages distinctes reliées à une plage commune conductrice au moyen de ponts conducteurs choisis de façon à permettre d'une part, le passage de courants correspondant au fonctionnement normal du générateur et à limiter ou à interrompre le courant reçu par une plage en cas de court-circuit à l'intérieur de cette plage. Selon les cas de réalisation de l'invention, la limitation de courant permettra d'éviter une situation dangereuse en cas de court-circuit accidentel, ou encore, elle permettra d'isoler définitivement la plage défectueuse si les ponts sont fusionnés définitivement, auquel cas, le générateur pourra continuer de fonctionner avec une capacité réduite dans le rapport de la surface d'une plage à la surface totale des plages du générateur.

Pour faciliter la réalisation de ces collecteurs sécuritaires, l'invention utilise des collecteurs supportés sur film plastique. L'usage de ces films supports est plus facile dans des systèmes tout-solide, tels que les générateurs à électrolytes polymères. De plus, le support plastique facilite la manipulation de collecteurs découpés, autrement difficiles à mettre en oeuvre, et peut servir de façon permanente à l'isolation des différentes composantes de l'accumulateur, notamment au niveau de piles enroulées, où le support joue le rôle d'isolant entre les piles superposées. De même le film support peut faciliter la manipulation des ensembles collecteur-électrode et servir de support à l'assemblage des autres composantes et de l'ensemble du générateur.

Un but additionnel de l'invention est de prévoir un procédé préférentiel de réalisation de ce type de collecteur sécuritaire particulièrement bien adapté aux générateurs en films minces en ce qu'il permet d'ajuster la conductivité de surface des collecteurs tout en réduisant au maximum l'excès de poids ou de volume des collecteurs. Au-delà de cette possibilité d'optimiser la densité d'énergie du générateur, ce procédé facilite la mise en oeuvre des générateurs électrolyte polymère, selon des procédés propres aux films de matières plastique, notamment, au niveau de la fabrication, du contrôle de qualité et du stockage temporaire de larges rouleaux-mère de complexes de films multicouches assemblés sous forme de piles.

La présente invention concerne un collecteur de courant, à collection latérale pour générateur électrochimique film mince à électrolyte solide polymère, utilisant des électrodes fonctionnant par rapport aux ions alcalins ou alcalino-terreux, comprenant les éléments suivants:

- un film support plastique isolant d'épaisseur comprise entre environ 1 et 30 microns, choisi pour sa compatibilité avec l'environnement chimique du générateur et traité au besoin pour l'adhésion sur au moins une de des faces,

- revêtement métallique conducteur d'épaisseur inférieure à environ 10 microns, adhérent à au au moins une face du film support isolant, choisi pour sa compatibilité avec le matériau d'électrode correspondant du générateur, et caractérisé en ce que sa surface conductrice est divisée en une multitude de plages distinctes adjacentes, chaque plage étant électriquement isolée par des bordures non-conductrices à l'exception d'au moins un pont conducteur de faible section relié à une marge latérale commune conductrice permettant une collection latérale de l'ensemble des plages distinctes; la nature, la géométrie et la résistance électrique des ponts conducteurs étant choisis de façon à permettre d'une part, le passage de courants correspondants aux courants maximum prévus pour chacune des plages individuelles de collection du générateur anticipé et à limiter d'autre part, en cas de court-circuit accidentel à l'intérieur d'une plage, le courant maximum reçu par cette plage en provenance de l'ensemble des plages du générateur, notamment par l'intermédiaire de la marge conductrice commune, lesdits ponts conducteurs agissant comme fusibles de façon à se couper irréversiblement lorsque le courant reçu du générateur excède par une valeur prédéterminée le courant maximum prévu pour être normalement généré par l'électrode du générateur correspondant à la surface de cette plage, et/ou étant tels qu'ils évitent de dissiper brusquement dans cette plage l'énergie totale du générateur sans toutefois limiter de façon appréciable les courants normalement prévus pour être normalement générés par l'électrode du générateur correspondant à la surface de cette plage.

De préférence le revêtement métallique conducteur laisse à découvert une partie du film support isolant de façon à définir une marge latérale non-conductrice. Le film support isolant est constitué de préférence de résines synthétiques compatibles avec des électrodes à base de métaux alcalins ou alcalino-terreux, notamment de polypropylène, de polyéthylène, de polyester ou de polysulfone.

Le revêtement métallique est de préférence constitué, au moins en surface, d'aluminium, de nickel, de chrome, de molybdène, de fer, d'or, d'argent ou de leurs alliages lorsque ce collecteur est destiné à être utilisé comme collecteur d'une cathode d'un générateur. Il est de préférence constitué en surface, de nickel, de chrome, de fer, de molybdène ou de leurs alliages lorsqu'il est destiné à être utilisé comme collecteur d'une anode d'un générateur. Il est de préférence constitué en surface, de nickel, de chrome, de fer, de molybdène ou de leurs alliages lorsqu'il est destiné à être utilisé avec une électrode de lithium métallique.

Selon une réalisation de l'invention, les surfaces des plages individuelles sont déterminées de façon à représenter moins de 10 pourcent de la surface totale du générateur prévu, préférentiellement moins de 1 pourcent de cette dernière. Les plages conductrices sont préférentiellement de formes sensiblement parallépipédiques.

Le revêtement métallique conducteur peut être constitué d'un métal métallisé sous vide, choisi préférentiellement parmi l'aluminium, l'or, le nickel, le chrome, le molybdène, l'argent, le fer et leurs alliages.

Selon une autre réalisations préférée de l'invention, le revêtement métallique conducteur et la résistance de surface des plages individuelles, de la marge de conduction commune et, au besoin, des ponts conducteurs sont déterminés au moyen d'un métal métallisé sous vide et choisi préférentiellement parmi le cuivre, l'or, le nickel, le chrome, le mobybdène, l'argent, le fer et leurs alliages, d'épaisseur comprises entre 0,005 et 0,1 micron, et, d'au moins un métal déposé électrochimiquement de façon à obtenir une épaisseur déposée comprise entre 0,1 à 4 microns dont le dernier métal déposé est choisi pour sa compatibilité avec le matériau d'électrode correspondant au générateur.

Selon une autre réalisation préférée de l'invention, les dimensions et la géométrie des plages individuelles, des ponts conducteurs et, au besoin la marge isolante latérale et les sections transversales non-conductrices sont déterminées par démétallisation locale d'une partie de la surface métallisée ou métallisé-plaquée, préférentiellement par ablation avec un faisceau laser ou par étincellage.

Selon une autre réalisation préférée de l'invention des sections isolantes transversales prévues entre les plages adjacentes ou les ensembles de plages adjacentes interrompent également la marge latérale commune conductrice de façon à isoler les unes des autres les plages conductrices ou leurs ensembles, le ou leurs ponts conducteurs ainsi que la section de la marge conductrice correspondante. Ces sections isolantes entre les plages adjacentes représentent par exemple moins de 10% de la surface des plages.

L'invention concerne aussi un ensemble collecteur-électrode décrit ci-dessus dont le film du matériau d'électrode est constitué d'une anode ou d'une cathode composite liée par l'electrolyte du générateur qui recouvre les plages conductrices et les bordures isolantes du film support localisées entre les plages, à l'exception d'une part, d'une partie de la marge latérale isolante et d'autre part, d'une bordure latérale constituée des ponts conducteurs et de la marge conductrice commune. Le matériau d'électrode composite de préférence est obtenu par des procédés d'épandage sous forme de solution ou de produit fondu ou encore par des procédés de transfert ou de lamination d'un film adhérent d'une électrode déjà élaborée.

Selon une autre réalisation préférée de l'invention, le film du matériau d'électrode est présent uniquement sur les surfaces des plages conductrices distinctes du collecteur, de façon à ce que les bordures non-conductrices séparant les plages adjacentes ne soient pas recouvertes, afin qu'en cas de court-circuit interne d'une plage et de rupture irréversible des ponts conducteurs, la plage défectueuse soit totalement isolée électriquement de l'ensemble du générateur. Le film du matériau d'électrode par exemple, est du lithium, ou une anode métallique. Il peut être obtenu par extrusion, pressage ou laminage d'un film préformé ou par des procédés d'application de lithium fondu.

L'ensemble collecteur-électrode selon la présente invention peut être présent dans un large ensemble de piles minces enroulées et stocké temporairement de façon sécuritaire sous forme d'un large bobinot dont les prises de contacts latérales ne sont pas encore appliqués sur la marge conductrice dudit ensemble.

L'invention concerne aussi un générateur sous forme enroulé ou empilé comportant au moins un des ensembles collecteur-électrode mentionné ci-dessus dans lequel la collection latérale de l'ensemble collecteur-électrode est obtenue par shoopage d'un métal tel que le zinc et ses alliages sur la marge conductrice de son collecteur, selon des procédés communs aux condensateurs électriques. Le générateur à électrolyte polymère selon l'invention peut se présenter sous la forme d'un film mince formé d'un ensemble de films adhérents, assemblé sous forme enroulé ou empilé, comportant au moins un des collecteurs ou un des ensembles collecteur-électrode selon l'invention.

L'invention concerne aussi un procédé de préparation d'un collecteur de courant auto-limitant pour générateur électrochimique film mince à électrolyte polymère utilisant des électrodes fonctionnant par rapport aux ions alcalins ou alcalino-terreux, à collection latérale, caractérisé par les trois étapes suivantes:

1- métallisation, par dépôt sous vide, de la totalité ou d'une partie de la surface d'au moins une face d'un film support isolant d'épaisseur comprise entre 1 et 30 microns, avec un métal choisi pour favoriser un dépôt électrochimique et possédant une conductivité électronique suffisante pour permettre d'amorcer un dépôt électrochimique ultérieur,

2- dépôt électrochimique d'au moins un métal additionnel, d'épaisseur totale comprise entre 0,1 et 4 microns, sur la totalité ou une partie de la surface métallisée de façon à réduire la résistance électrique de surface du collecteur à un niveau suffisant pour éviter les pertes par effet résistif dans ce dernier, le dernier métal déposé étant choisi pour sa compatiblité avec le matériau de l'électrode correspondant à ce collecteur,

3- ablation locale d'une partie plus ou moins importante de la surface conductrice supportée de façon à en subdiviser la surface en plages conductrices distinctes adjacentes reliées entre elles au moyen d'une marge latérales conductrice commune, le contact électrique entre les plages distinctes et la marge conductrice étant assuré par un ou plusieurs ponts électriques de faible section, caractérisés en ce que la nature, la géométrie et la résistance électrique du ou des ponts conducteurs sont choisis de façon à permettre d'une part, le passage de courants correspondants aux courants maximum normaux prévus pour chacune des plages du générateur et à limiter ou à interrompre d'autre part, en cas de court-circuit interne à l'intérieur d'une plage, le courant maximum reçu par cette plage en provenance de l'ensemble de la surface du générateur par le biais de la marge conductrice commune, lesdits ponts conducteurs agissant comme fusibles de façon à se couper irréversiblement lorsque le courant reçu du générateur excède par une valeur prédéterminée le courant maximum prévu pour être normalement généré par l'électrode du générateur correspondant à la surface de cette plage, et/ou étant tels qu'ils évitent de dissiper brusquement dans cette plage l'énergie totale du générateur sans toutefois limiter de façon appréciable les courants normalement prévus pour être normalement générés par l'électrode du générateur correspondant à la surface de cette plage.

De préférence le procédé de métallisation sous vide est choisi parmi les procédés de vaporisation thermochimique simple, ou assisté de type pulvérisation cathodique ou à faisceau d'électron et possède préférentiellement une épaisseur variant entre 0,005 et 0,1 micron.

La métallisation conductrice est normalement constituée d'éléments compatibles avec le dépôt électrochimique, choisis préférentiellement parmi le cuivre, le nickel, le molybdène, le chrome, l'argent, l'or et leurs alliages, possèdent préférentiellement une résistance par surface carrée inférieure à 5 Ω et ne couvre pas toute la surface du support isolant de façon à laisser une marge latérale non-conductrice sur le bord opposé à celui de la marge conductrice commune.

Le dernier métal déposé électrochimiquement est de préférence du fer, du nickel ou du chrome et les conditions du dépôt électrochimique peuvent être mises à profit pour varier localement la résistance électrique du dépôt ou pour contrôler l'état de surface externe du métal déposé.

L'ablation d'une partie de la surface conductrice est faite de préférence par usinage laser, par étincelage ou encore par des procédés mécaniques ou chimiques, par exemple avant l'étape du dépôt électrochimique de façon à pouvoir définir rapidement la forme et les dimensions des plages, des ponts conducteurs, de la marge conductrice commune et, au besoin, des sections transversales sur toute la largeur du film support.

L'ablation pour aussi être effectuée après l'étape du dépôt électrochimique de façon à pouvoir définir la forme et les dimensions des plages, des ponts conducteurs, de la marge conductrice commune et, au besoin, des sections isolantes transversales sur toute la largeur du film support.

La surface des plages individuelles est normalement choisie de façon à représenter moins de 10 pourcent de la surface totale prévue pour le collecteur du générateur, préférentiellement moins de 1 pourcent de cette surface. Le film support isolant est de préférence constitué de matières plastiques contenant préférentiellement du polypropylène, du polysulfone, du polyéthylène ou du polyester de haute pureté, préalablement traité par décharge couronne sur la ou les surfaces, à être métallisées et choisies pour leur compatibilité chimique avec l'environnement chimique du générateur électrochimique fonctionnant avec des électrodes contenant des métaux alcalins. Le procédé peut aussi comporter une étape additionnelle d'application d'un matériau d'électrode consistant en une anode ou une cathode du générateur de façon à constituer un ensemble électrode-collecteur adhérent; ledit matériau d'électrode n'étant toutefois pas appliqué sur la marge latérale non-conductrice ni sur le bord opposé du film support comportant les ponts conducteurs et la marge conductrice commune. Le matériau d'électrode peut être appliqué par des procédés d'épandage par mise en solution, par voie fondue ou par transfert ou lamination d'un film déjà élaboré.

Le revêtement d'électrode ne couvre habituellement que les surfaces métallisées des plages conductrices.

Les caractéristiques et avantages de l'invention ressortiront d'ailleurs de la description qui suit à titre d'exemple et sans caractère limitatif en référence aux dessins annexés dans lesquels:

la FIGURE 1A est une vue schématique et en plan d'un collecteur selon la présente invention;
la FIGURE 1B est une autre vue schématique d'une variante;
les FIGURES 2A, 2B, 2C sont des vues en plan d'autres variantes;
la FIGURE 3 est une vue en perspective d'un assemblage de générateur par enroulement utilisant des collecteurs selon l'invention; et
la FIGURE 4 est une illustration en partie développée d'une pile constituée entre autre de collecteurs selon l'invention.

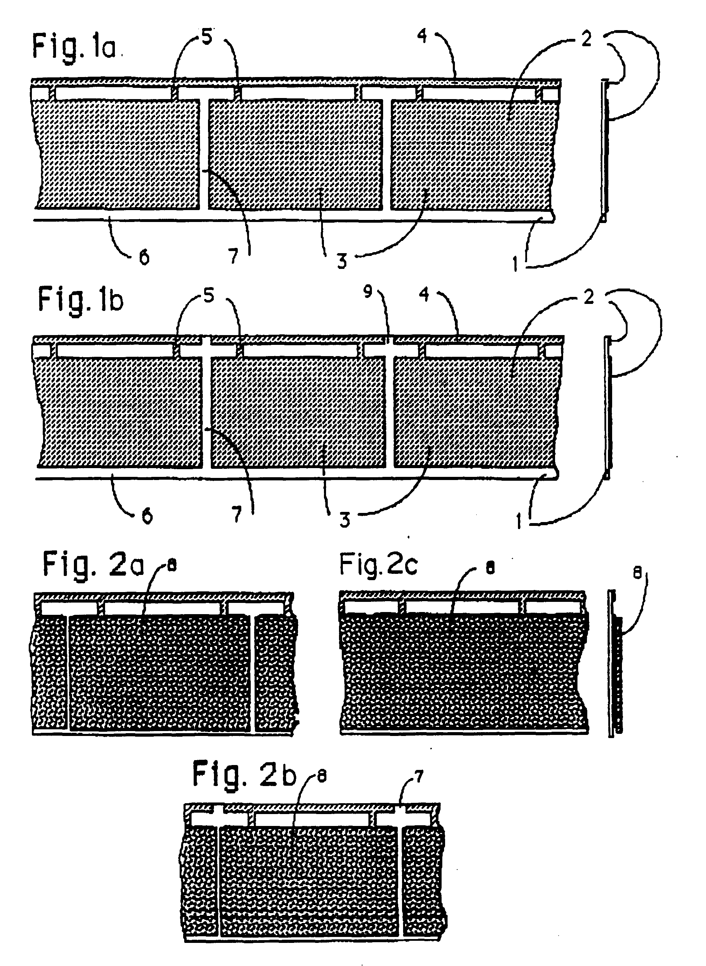

Les FIGURES 1 à 4 permettront de mieux comprendre l'invention et d'en illustrer d'autres avantages. Ces figures ne respectent pas les proportions réelles des éléments, afin d'en faciliter la compréhension. La numérotation reliant les figures au texte est utilisée seulement pour en faciliter la lecture, elle ne doit pas être considérée comme une limitation de la portée ou du sens de ce dernier.

Les collecteurs et les ensembles collecteur-électrode de la présente invention sont illustrés de façon sommaire à la FIGURE 1, à titre d'exemple non-limitatif. Ils sont caractérisés par les éléments suivants:

-   un film support mince de matière plastique isolante 1 permettant la manipulation du collecteur et son isolation électrique vis-à-vis d'autres composantes du générateur,
-   un revêtement conducteur mince 2, adhérent à au moins une des faces du support, divisé en une multitude de plages 3 conductrices isolées des plages adjacentes par des sections non-conductrices 7 et mises en contact avec une marge conductrice latérale commune 4 au moyen de ponts conducteurs 5, la surface de chacune des plages étant choisie de façon à représenter moins de 10%, préférentiellement moins de 1% de la surface des plages du générateur complet, les formes parallélépipédiques sont particulièrement avantageuses pour la réalisation de ces plages,
-   le ou les ponts conducteurs 5 étant choisis de nature ou de géométrie telle, qu'ils sont capables d'une part, de limiter, ou d'interrompre irréversiblement le courant reçu de l'ensemble du générateur par une plage conductrice en situation de court-circuit, et qu'ils sont d'autre part, suffisamment conducteurs pour soutenir amplement les pointes de courant collectées par cette plage et résultant des conditions normales d'utilisation du générateur.
-   une marge longitudinale non-conductrice 6 du bord opposé de la marge conductrice commune, préférentiellement obtenue par un recouvrement incomplet du film isolant par le revêtement conducteur, afin de faciliter l'assemblage du générateur et l'application de contacts électriques aux extrémités latérales une fois l'assemblage terminé.

Lorsque ce type de collecteur est utilisé dans le générateur complet, la surface du film de l'électrode correspondante 8 est fixée de façon à recouvrir les plages conductrices 3 à l'exception d'au moins une partie de la marge longitudinale isolante 6 et, préférentiellement, à l'exception de la marge commune 4 et de la zone latérale où sont localisés les ponts conducteurs 5.

Ces types de collecteurs 3 peuvent être installés sur l'une ou les deux faces du film support isolant 1 et servir à l'une ou l'autre des électrodes du générateur pour autant que le revêtement constituant le matériau d'électrode 8 soit appliqué longitudinalement et que des discontinuités dans le revêtement coincident avec les sections non-conductrices 7 séparant transversalement les plages adjacentes tel qu'illustré à la FIGURE 2A, de façon à éviter un contact électronique possible par le revêtement d'électrode. Avec ce mode d'utilisation des collecteurs de l'invention, une plage défectueuse mise en court-circuit sera complètement isolée du reste du générateur lorsque les ponts conducteurs fusibles de cette plage auront été détruits et le reste du générateur peut être préservé.

Une variante utile du désign précédent illustré en FIGURE 2B, est obtenu en utilisant le collecteur de la FIGURE 1B, pour lequel la marge conductrice 4 est également découpée par les sections 7. Cette variante facilite le stockage temporaire de larges enroulements de piles superposées utilisant ces collecteurs pour lesquels aucun contact n'est possible entre les plages individuelles tant que des collecteurs latéraux n'ont pas été appliqués aux extrémités des enroulements. Cette variante facilite le stockage sécuritaire de larges enroulements de piles assemblées "Power Roll" tout en permettant de contrôler et d'isoler des plages déficientes lors de la fabrication des piles laminées notamment dans les cas où une plage ne présenterait qu'un court-circuit partiel.

Lorsque le revêtement d'électrode 8 est une électrode composite liée par un polymère, anode ou cathode, appliquée en continu sur le collecteur de l'invention, ce dernier peut entraîner une conductivité électronique partielle entre les plages adjacentes, (voir Figure 2C.) Avec ce mode de réalisation de l'invention, une plage défectueuse mise en court-circuit, ne sera pas totalement isolée de l'ensemble du générateur, meme après rupture des ponts conducteurs, auquel cas, le générateur sera protégé contre une décharge brusque, mais subira une auto-décharge plus ou moins lente, selon les designs utilisés et la conductivité de surface du revêtement d'électrode composite.

La présente invention couvre également un procédé de réalisation de ces collecteurs de courant et de leurs ensembles collecteur-électrode correspondants qui sont particulièrement bien adaptés aux besoins particuliers des générateurs à électrolytes polymères, particulièrement ceux fonctionnant avec des électrodes à base de lithium et à des densités de courant moyennement élevées, par exemple, de l'ordre du milliampère par centimètre carré. Ces générateurs nécessitent collecteurs de courant dont la résistance par surface carrée doit être inférieure à 0,5 Ω préférentiellement inférieure à 0,1 Ω mais dont l'excès de métal conducteur doit être limité. Une résistivité de surface plus élevée se traduit par des chutes de tension du générateur lorsque la distance de collection latérale devient appréciable. L'équation 1 ci-dessous permet, en première approximation, de choisir la résistance de surface requise pour un collecteur d'une largeur donnée compte-tenu de la densité de courant maximale prévue en utilisation normale:

$$\Delta V = (I/cm^2)(\Omega \text{ par surface carrée } L^2/2) \qquad (1)$$

où, $\Delta V$ est la chute de voltage admissible pour le film collecteur, $(I/cm^2)$ est la densité de courant maximale d'utilisation normale, ($\Omega$ par surface carrée) la résistance de surface du collecteur de courant et L la longueur d'électrode à drainer, par exemple, la largeur en centimètres du film collecteur. La chute de voltage admissible peut varier selon le type d'application envisagée, toutefois, dans la majorité des cas cette chute ohmique doit demeurer inférieure à quelques pourcents de la tension du générateur.

Le procédé de fabrication est caractérisé par les trois étapes suivantes:

- métallisation sous vide d'au moins une partie de la surface d'au moins une face d'un film support isolant avec un métal favorable à un dépôt électrochimique,

- dépôt électrochimique d'un métal compatible avec l'électrode correspondante du générateur à une épaisseur suffisante pour obtenir une résistance de la surface conductrice inférieure à 0,5 Ω par surface carrée, préférentiellement inférieure à 0,1 Ω par surface carrée,

- ablation, préférentiellement par faisceau laser ou étincellage, d'au moins une partie de la surface conductrice de façon à subdiviser la surface du collecteur en une multitude de plages adjacentes distinctes, reliées entre elles par une marge conductrice commune au moyen d'un ou de plusieurs ponts conducteurs dont la nature et la résistance électrique sont telles que ces ponts peuvent limiter ou interrompre le courant circulant entre une plage et la marge commune.

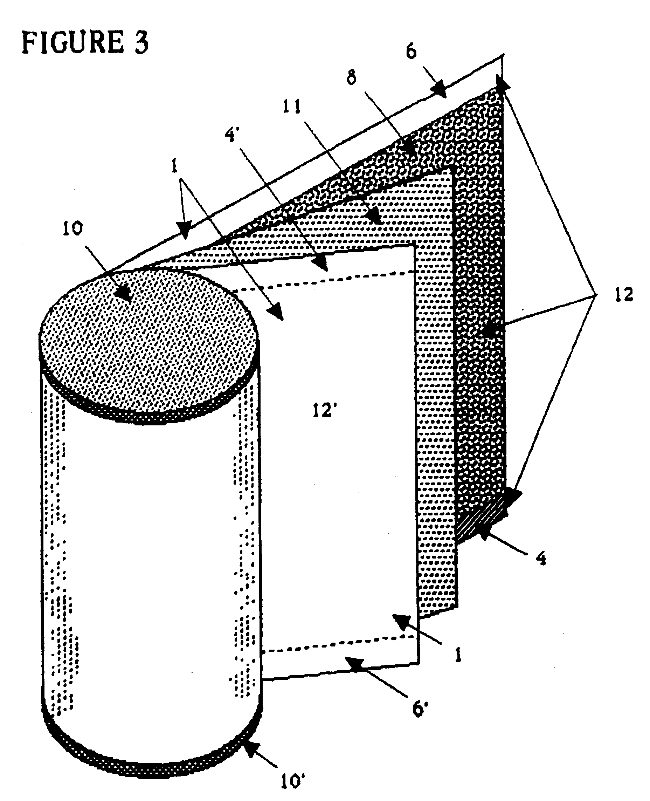

Certains éléments de ces dispositifs et de ce procédé se rapprochent partiellement des dispositifs et des procédés existants, décrits pour la réalisation de condensateurs électrostatiques, tels que les brevets américain 2 683 792, français 2 637 118, américain 4 494 168 et européen 0 073 555. Le fait que les collecteurs selon la présente invention se rapprochent à certains égards des éléments ou procédés de mise en oeuvre des collecteurs des condensateurs électrostatiques résulte de l'évolution des générateurs au lithium vers des systèmes entièrement solides et constitués de films de plus en plus minces. Ce rapprochement est particulièrement sensible au niveau des modes d'assemblages possibles, par exemple, les enroulements cylindriques ou à plats ainsi que les empilements plats en zig-zag ou discontinus et des modes de collection du courant des électrodes par les extrémités des assemblages, préférentiellement par projection de zinc tel qu'illustré à la FIGURE 3. Cette figure illustre de façon très schématique un mode d'assemblage des générateurs par enroulement utilisant deux ensembles collecteur-électrode 12 et 12' et un film d'électrolyte 11. Les détails des plages et des ponts ne sont pas représentés sur cette figure ; les collecteurs de zinc appliqués par schoopage aux extrémités latérales des films enroulés sont toutefois représentés 10 et 10'.

On rappelle que le schoopage est une projection à la flamme.

Des préférences majeures existent cependant entre les deux technologies, notamment au niveau des composantes électrochimiques additionnelles dans le cas des générateurs, des problèmes de compatibilité électrochimique et d'environnement chimique imposés par la réactivité chimique extrême des matériaux d'électrodes, surtout lorsque des métaux alcalins sont mis en jeu. De plus des différences majeures existent également au niveau des collecteurs de courant ainsi que des matériaux isolants. La conductivité requise des collecteurs des générateurs est nettement supérieure, dans la majorité des cas, à la résistivité de surface des armatures des collecteurs métallisés sous vide à l'aluminium et au zinc, volontairement limitée à plus de 1 $\Omega$ par surface carrée pour permettre une auto-cicatrisation facile. D'autres différences majeures existent au niveau du film isolant qui doit être choisi pour sa compatibilité avec l'environnement chimique du générateur plutôt que pour ses hautes qualités diélectriques; les gradients de voltage dépassent rarement plus de 4 volts/micron dans un générateur, relativement à 250 volts/micron pour un condensateur électrostatique. La stabilité d'un matériau face à l'environnement chimique du générateur est défini comme la résistance à l'oxydation ou à la réduction par les matériaux d'électrodes lorsque en contact physique direct ou, par l'absence de contaminants susceptibles de diffuser lentement et de contaminer les matériaux d'électrodes ou leur interfaces, par exemple, $H_2O$, résidus de synthèse et produits de dégradations. Ce critère est particulièrement important lorsque le générateur met en jeu des électrodes à base de métaux alcalins ou alcalino-terreux.

Les exemples suivants permettront d'utiliser divers modes de réalisation, non limitatifs, des dispositifs de l'invention, de faire valoir leurs avantages et de distinguer ces derniers de l'art antérieur. Les électrolytes et les cathodes utilisés pour ces exemples, ainsi que des façons de réaliser les générateurs en films minces ont été décrits prédécemment dans les brevets antérieurs tels que: US 3 303 748; US 4 579 793; US 4 851 307 et US 4 505 997.

EXEMPLE 1

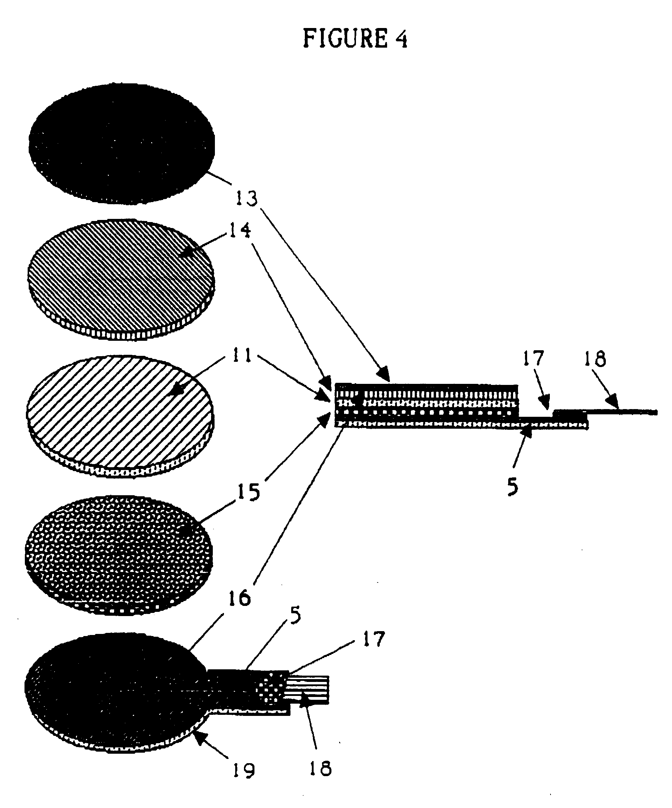

Dans cet ensemble, illustré à la Figure 4, une petite pile constituée d'une anode de lithium de 15 microns d'épaisseur 14 laminée sur feuillard de nickel de 7 microns 13, d'un électrolyte polymère 11 constitué d'un polyéther de l'oxyde d'éthylène avec un sel de lithium de formule $(CF_3SO_2)_2NLi$ et d'une cathode composite à base de $TiS_2$ 15, d'environ 1,5C/cm$^2$ est assemblée. Le film de cette cathode est élaboré par épandage par voie de solvant sur un film support de polyesther 19 métallisé à l'aluminium 16 et dont la résistivité de surface est de 5 $\Omega$ par surface carré. Cet ensemble collecteur-cathode supporté est découpé de façon à pouvoir collecter le courant de la cathode par le biais d'une languette du collecteur-métalllisé non-recouverte par la cathode. Une résine époxy chargée à l'argent 17 est utilisée pour établir le contact entre la languette métallisée et le collecteur externe 18. Ce générateur dont la surface utile est de 4 cm$^2$ est mis en cyclage, à 25°C, sur plus de 75 cycles à des courants de décharge/charge de 80 à 60 $\mu A$ respectivement. Les performances obtenues avec ce générateur sont équivalentes à celles d'un générateur où la cathode est élaborée sur un film d'aluminium de 15 microns, c'est-à-dire que le taux d'utilisation du matériau de la cathode est stable à 80% après 75 cycles. Ce test démontre clairement l'intérêt et la faisabilité de collecteur de courants ultra-minces, environ 200 Å d'aluminium dans des générateurs tout solide. Toutefois pour certains types de générateurs à électrolytes polymères, les densités de courant à collecter peuvent atteindre quelques mA/cm$^2$, et les profondeurs d'électrodes à drainer latéralement, L de l'équation 1, peuvent dépasser 10 cm dans certains générateurs enroulés, les chutes ohmiques générées dans le collecteur métallisé deviennent alors trop pénalisantes sur la tension. L'usage d'un collecteur métallisé sous vide est donc limité à des générateurs de petites dimensions ne nécessitant pas des densités de courant élevées; ceci exclut, par exemple, les générateurs destinés à la traction électrique. De plus, à l'usage ce type de métallisation est très fragile d'utilisation et s'endommage et se corrode facilement.

La pile et son emballage constitué d'un complexe Al/PP thermosoudable, est finalement utilisée pour illustrer l'aspect sécuritaire des collecteurs capables de limiter ou d'interrompre des courants abusifs. La pile, après cyclage, est donc mise directement aux bornes d'une alimentation AC(110V, 60 Hertz). Aucun dommage apparent du générateur n'est observé extérieurement, même si ce dernier est instantanément et irréversiblement détruit. Une démétallisation locale est observée au démontage dans la zone de la languette servant de pont fusible 5 et au contact externe. Dans des conditions similaires, un générateur construit avec une cathode élaborée sur aluminium 15 microns subit une dégradation explosive avec fusion locale des collecteurs. Cet exemple illustre bien le caractère sécuritaire des collecteurs de l'invention comportant des ponts fusibles.

## EXEMPLE 2

Cet exemple illustre un mode de réalisation d'un générateur sécuritaire. Cet exemple est basé sur un collecteur d'aluminium métallisé supportée sur un polypropylène (4 $\Omega$/carré) pour utilisation avec une cathode de $TiS_2$ dans un enroulement de type AA. Ce collecteur est conçu pour une collection latérale et une prise de contact externe par pulvérisation de zinc. Ce type de générateur réalisé avec des électrolytes polymères est illustré de façon générale à la FIGURE 3. A titre d'exemple, les dimensions du collecteur de cet enroulement sont estimées à environ, 180 cm de longueur par 5 cm de largeur. Les surfaces des plages à mettre en oeuvre seront donc de 9 cm$^2$, si l'on désire diviser l'ensemble de la surface du générateur en plages représentant moins de 1% de sa capacité. 1% est considéré raisonnable pour éviter un débalancement appréciable de la capacité du générateur, par suite de la perte d'une plage défectueuse, si ce dernier est monté en série avec d'autres générateurs. A partir des caractéristiques électrochimiques d'une pile semblable à celle de l'exemple 1, la densité de courant de pointe normale est déterminée à 1 mA/cm$^2$. Les ponts fusibles d'une plage de 9 cm$^2$ doivent donc pouvoir supporter des courants de pointe normaux de l'ordre de 9 mA sans chute ohmique appréciable. Pour éviter une ouverture accidentelle des ponts d'une plage, le courant d'ouverture des ponts est fixé'à titre d'exemple, à 25 et 30 mA respectivement après quelques secondes confirmant le comportement observé lors de l'étude des collecteurs seuls. La rupture des ponts correspond à une brûlure locale de l'aluminium, sans dommage apparent au film support et aux autres films enrivonnants.

D'autres géométries de ponts conducteurs plus optimisés peuvent bien entendu être développées en tenant compte des besoins spécifiques des générateurs de l'invention, notamment au niveau de l'optimisation des performances, du nombre, de la géométrie et de la résistance de surface des ponts ainsi ainsi que par l'usage de la démétallisation par laser démontré à l'exemple 3 suivant. Cet exemple vise uniquement à illustrer comment les collecteurs peuvent être mis à profit et conçus pour limiter la chaleur générée dans une plage défectueuse et pour protéger l'ensemble du générateur, dans certains modes de réalisation, par exemple lorsque l'ensemble collecteur-cathode est réalisé en respectant l'arrangement des FIGURES 2A et 2B.

## EXEMPLE 3

Dans cet exemple on prépare un collecteur selon le procédé de l'invention en métallisant sous vide un film de polypropylène de haute pureté traité par décharge par effet couronne. On utilise du cuivre pour la métallisation car ce métal constitue un substrat idéal pour déposer électrochimiquement un revêtement de nickel. La résistance obtenue à partir d'un bain de sulfamate à 40°C possède une épaisseur d'environ 0,3 micron et une résistance de surface inférieure à 0,1$\Omega$/ par surface carrée. Des essais de démétallisation au laser $CO_2$ pulsé, 2100 nanosecondes et 10,6 microns de longueur d'onde, montrent que cette technique peut être utilisée avant le placage électrochimique pour contrôler rapidement la surface et la forme des plages, des ponts et des marges avant le dépôt électrochimique de nickel. La précision des contours obtenus par démétallisation laser est très bonne et de l'ordre de quelques microns et le film de polypropylène demeure intact. Après placage les dimensions des plages du revêtement conducteur sont sensiblement les mêmes lorsque que l'épaisseur de nickel déposé est de 0,3 micron. Toutefois, les essais de démétallisation au laser indiquent qu'il est possible également de démétalliser après le dépôt électrochimique lorsque l'épaisseur de ce dernier ne dépasse pas trop le micron.

## EXEMPLE 4

Cet exemple est similaire à celui de l'exemple 2 mais vise un générateur de plus grande taille avec des performances en courant supérieures. L'autre différence provient du type de collecteur utilisé pour la cathode, dont la résistance de surface est optimisée selon le procédé de l'invention décrit à l'exemple 3, par exemple par métallisation le cuivre et placage de nickel sur PP. Les caractéristiques de la plage considérée dans cet exemple et représentées schématiquement à la FIGURE 1, sont les suivantes: dimensions (30 cm X 12 cm) soit 1% de la surface totale, voltage moyen 3 volts, courant normal d'utilisation en pulse (5 mA/cm$^2$). Ces données sont dérivés d'un assemblage de type enroulement cylindrique de 100 Wh basé sur une pile de type oxyde de vanadium/lithium optimisée pour la traction électrique, fonctionnant à 60°C, et dont les dimensions externes sont d'environ 15 cm de hauteur par 8 cm de diamètre. Le courant maximum normal d'une plage est donc de 1,8A. Diverses géométries des ponts sont étudiées et la forme la plus fréquente retenue pour les essais sur le collecteur PP/Cu/Ni/(0,3$\mu$) est une languette comportant un rétrécissement constitué de deux encoches en V mises face à face. Les ponts électriques sont réalisés dans ce cas par abrasion mécanique et par découpe directe du film du collecteur supporté pour des questions de facilité de mise en oeuvre. Un courant de rupture des ponts réalisés avec ces films est observé une valeur moyenne de à 0,35 A par mm de largeur séparant les V. Lorsque le film PP/Cu/Ni est maintenu entre d'autres films de polypropylène, le bris du fusible se fait par fusion ou brûlure des métaux. Il est intéressant de noter l'effet de la puissance dissipée par la rupture du fusible; pour une largeur de 3 mm l'énergie dégagée par le fusible a endommagé 9 épaisseurs de PP (28 microns) adjacents, comparativement à 3 pour une largeur de 1,5 mm et aucun pour une largeur de 1 mm. Il en ressort qu'il est préférable de disperser l'énergie dégagée par les ponts sur une plus grande surface en augmentant le nombre de ponts pour une même largeur équivalente. Il est donc possible de mettre à profit des collecteurs de courant optimisés par métallisation/placage pour réaliser des plages protégées contre des courants abusifs, pouvant provenir de l'ensemble du générateur, par des ponts résistifs ou fusibles. Dans ce cas, pour un courant de rupture fixé à 6A, soit environ trois fois le courant de pointe normal d'une plage, il faudra donc installer 17 fusibles de 1 mm de largeur par plage individuelle.

Une pile est assemblée à partir des composantes électrochimiques mentionnées dans cet exemple. Le collecteur PP/Cu/Ni(0,3μ) est préparé selon l'exemple 3. Une plage de 10 cm X 10 cm et quatre ponts de 1 mm de largeur sont aménagés sur un bord par ablation mécanique du dépôt après placage. Le matériau de la cathode composite est de l'oxyde de vanadium appliqué par voie solvant par sérigraphie et le générateur est complété par transfert à 80°C des autres composantes. Le contact électrique avec l'ensemble collecteur-cathode est obtenu en liant le collecteur à un feuillard du cuivre au moyen d'une résine d'époxy chargée à l'argent. On constate dans un premier temps que les ponts aménagés n'affectent pas la tension lors de décharges à 0,5A. Cependant, lorsque la plage est mise en court-circuit interne et qu'une source de tension externe de 3V est branchée à l'extérieur, les ponts se rupturent en chaîne rapidement alors que le courant atteint 2A.

Il va de soi que cet exemple ne constitue pas un dispositif optimisé et que des modifications avantageuses peuvent y être incorporées, notamment au niveau de la géométrie des ponts et des plages, des épaisseurs locales des collecteurs qui peuvent être contrôlées à l'étape du placage électrochimique de façon à optimiser les résistivités de surface des plages; d'autres critères peuvent également être utilisés à l'intérieur de cette invention pour définir différemment la taille et la forme des ponts pour adapter les collecteurs à des générateurs particuliers.

## Revendications

1. Collecteur de courant à collection latérale, pour générateur électrochimique film mince à électrolyte solide polymère, utilisant des électrodes fonctionnant par rapport aux ions alcalins ou alcalino-terreux, comprenant les éléments suivants:

    - un film support plastique isolant d'épaisseur comprise entre environ 1 et 30 microns, choisi pour sa compatibilité avec l'environnement chimique du générateur et traité au besoin pour l'adhésion sur au moins une de ses faces,

    - un revêtement métallique conducteur, d'épaisseur inférieure à environ 10 microns, adhérent à au moins une face du film support isolant, choisi pour sa compatibilité avec le matériau d'électrode correspondant du générateur, et caractérisé en ce que sa surface conductrice est divisée en une multitude de plages distinctes adjacentes, chaque plage étant électriquement isolée par des bordures non-conductrices à l'exception d'au moins un pont conducteur de faible section relié à une marge latérale commune conductrice permettant une collection latérale de l'ensemble des plages distinctes ; la nature, la géométrie et la résistance électrique des ponts conducteurs étant choisis de façon à permettre d'une part, le passage de courants correspondants aux courants maximum prévus pour chacune des plages individuelles de collection du générateur anticipé et à limiter d'autre part, en cas de court-circuit accidentel à l'intérieur d'une plage, le courant maximum reçu par cette plage en provenance de l'ensemble des plage du générateur, lesdits ponts conducteurs agissant comme fusibles de façon à se couper irréversiblement lorsque le courant reçu du générateur excède par une valeur prédéterminée le courant maximum prévu pour être normalement généré par l'électrode du générateur correspondant à la surface de cette plage, et/ou étant tels qu'ils évitent de dissiper brusquement dans cette plage l'énergie totale du générateur sans toutefois limiter de façon appréciable les courants normalement prévus pour être normalement générés par l'électrode du générateur correspondant à la surface de cette plage.

2. Collecteur selon la revendication 1, dans lequel le revêtement métallique conducteur laisse à découvert une partie du film support isolant de façon à définir une marge latérale non-conductrice.

3. Collecteur selon la revendication 1, dans lequel le film support isolant est constitué de résines synthétiques compatibles avec des électrodes à base de métaux alcalins ou alcalino-terreux.

4. Collecteur selon les revendications 1, 2, ou 3 dans lequel la résine synthétique est constitué de polypropylène, de polyéthylène, de polyéster ou de polysulfone.

5. Collecteur selon l'une quelconque des revendications 1 à 3, dans lequel le revêtement métallique est constitué, au moins en surface, d'aluminium, de nickel, de chrome, de molybdène, de fer, d'or, d'argent ou de leurs alliages lorsque ce collecteur est destiné à être utilisé comme collecteur d'une cathode d'un générateur.

6. Collecteur selon la revendication 1, dans lequel le revêtement métallique est constitué en surface, de nickel, de chrome, de fer, de molybdène ou de leurs alliages lorsque ce collecteur est destiné à être utilisé comme collecteur d'une anode d'un générateur.

7. Collecteur selon la revendication 6, dans lequel le revêtement métallique est constitué en surface, de nickel, de chrome, de fer, de molybdène ou de leurs alliages lorsque ce collecteur est destiné à être utilisé avec une électrode de lithium métallique.

8. Collecteur selon l'une quelconque des revendications 1, 2, 6 ou 7, pour lequel les surfaces des plages individuelles sont déterminées de façon à représenter moins de 10 pourcent de la surface totale du générateur prévu.

9. Collecteur selon l'une quelconque des revendications 1, 2, 6 ou 7, pour lequel les surfaces des plages individuelles sont déterminées de façon à représenter moins de 1 pourcent de la surface totale du générateur.

10. Collecteur selon l'une quelconque des revendications 1, 2, 6 ou 7, dans lequel les plages conductrices sont de formes sensiblement parallépipédiques.

11. Collecteur selon la revendication 1, dans lequel le revêtement métallique conducteur est constitué d'un métal métallisé sous vide.

12. Collecteur selon la revendication 1, dans lequel le métal est choisi parmi l'aluminium, l'or, le nickel, le chrome, le molybdène, l'argent, le fer et leurs alliages.

13. Collecteur selon la revendication 1, caractérisé en ce que le revêtement métallique conducteur et la résistance de surface des plages individuelles, de la marge de conduction commune et, au besoin, des ponts conducteurs sont déterminés au moyen d'un métal métallisé sous vide et choisi parmi le cuivre, l'or, le nickel, le chrome, le molybdène, l'argent, le fer et leurs alliages, d'épaisseur comprise entre 0,005 et 0,1 micron, et, d'au moins un métal déposé électrochimiquement de façon à obtenir une épaisseur déposé comprise entre 0,1 à 4 microns dont le dernier métal déposé est choisi pour sa compatibilité avec le matériau d'électrode correspondant au générateur.

14. Collecteur selon la revendication 13, caractérisé en ce que les dimensions et la géométrie des plages individuelles, des ponts conducteurs et, au besoin, la marge isolante latérale et les sections transversales non-conductrices sont déterminés par démétallisation locale d'une partie de la surface métallisée ou métallisée-plaquée.

15. Collecteur selon la revendication 14, caractérisé en ce que la démétallisation s'effectue par ablation avec un faisceau laser ou par étincellage.

16. Collecteur selon la revendication 1, dans lequel des sections isolantes transversales prévues entre les plages adjacentes interrompent également la marge latérale commune conductrice de façon à isoler les unes des autres les plages conductrices ou les ensembles plages conductrices, le ou leurs ponts conducteurs ainsi que la section de la marge conductrice correspondante.

17. Collecteur selon la revendication 13, dans lequel les sections isolantes entre les plages adjacentes représentent moins de 10% de la surface des plages.

18. Ensemble collecteur-électrode utilisant un collecteur selon la revendication 1, dont le film du matériau d'électrode est constitué d'une anode ou d'une cathode composite liée par l'électrolyte du générateur qui recouvre les plages conductrices et les bordures isolantes du film support localisées entre plages, à l'exception d'une part d'une partie de la marge latérale isolante d'autre part, d'une bordure latérale constituée de ponts conducteurs et de la marge conductrice commune.

19. Ensemble collecteur-électrode selon la revendication 18, dont le matériau d'électrode composite est obtenu par des procédés d'épandage sous forme de solution ou de produit fondu ou encore par des procédés de transfert ou de lamination d'un film adhérent d'une électrode déjà élaborée.

20. Ensemble collecteur-électrode selon la revendication 18, dont le film du matériau d'électrode est présent uniquement sur les surfaces des plages conductrices distinctes du collecteur, de façon à ce que les bordures non-conductrices séparant les plages adjacentes ne soient pas recouvertes, afin qu'en cas de court-circuit interne d'une plage et de rupture irréversible des ponts conducteurs, la plage défectueuse soit totalement isolée électriquement de l'ensemble du générateur.

21. Ensemble collecteur-électrode selon la revendication 20, dans lequel le film du matériau d'électrode est du lithium, ou une anode métallique.

22. Ensemble collecteur-électrode selon la revendication 21, dans lequel le film d'électrode est obtenu par extrusion, pressage ou laminage d'un film préformé ou par des procédés d'application de lithium fondu.

23. Ensemble collecteur-électrode selon l'une quelconque des revendications 18 à 22 réalisé en utilisant le collecteur selon la revendication 16, présent dans un large ensemble de piles minces enroulées et stocké temporairement de façon sécuritaire sous forme d'un large bobinot dont les prises de contacts latérales ne sont pas encore appliqués sur la marge conductrice dudit ensemble.

24. Générateur à électrolyte polymère sous forme de film mince formé d'un ensemble de films adhérents, assemblé sous forme enroulé ou empilé, comportant au moins un des collecteurs selon l'une quelconque des revendications 1, 2, 6 ou 7 ou un des ensembles collecteur-électrode selon l'une quelconque des revendications 18 à 23.

25. Procédé de préparation d'un collecteur de courant pour générateur électrochimique film mince à électrolyte polymère utilisant des électrodes fonctionnant par rapport aux ions alcalins ou alcalino-terreux, à collection latérale, comprenant les trois étapes suivantes:

- métallisation, par dépôt sous vide, de la totalité ou d'une partie de la surface d'au moins une face d'un film support isolant, d'épaisseur comprise entre 1 et 30 microns, avec un métal choisi pour favoriser un dépôt électrochimique et possédant une conductivité électronique suffisante pour permettre d'amorcer un dépôt électrochimique ultérieur;
- dépôt électrochimique d'au moins un métal additionnel, d'épaisseur totale comprise entre 0,1 et 4 microns, sur la totalité ou une partie de la surface métallisée de façon à réduire la résistance électrique de surface du collecteur à un niveau suffisant pour éviter des pertes par effet résistif dans ce dernier, le dernier métal déposé étant choisi pour sa compatibilité avec le matériau de l'électrode correspondant à ce collecteur,
- ablation locale d'une partie plus ou moins importante de la surface conductrice supportée de façon à en subdiviser la surface en plages conductrices distinctes adjacentes reliées entre elles au moyen d'une marge latérale conductrice commune, le contact électrique entre les plages distinctes et la marge conductrice étant assuré par un ou plusieurs ponts électriques de faible section, la géométrie et la résistance électrique du ou des ponts conducteurs sont choisis de façon à permettre d'une part, le passage de courants correspondants aux courants maximum normaux prévus pour chacune des plages du générateur et à limiter ou à interrompre d'autre part, en cas de court-circuit interne à l'intérieur d'une plage, le courant maximum reçu par cette plage en provenance de l'ensemble de la surface du générateur par le biais de la marge conductrice commune, lesdits ponts conducteurs agissant comme fusibles de façon à se couper irréversiblement lorsque le courant reçu du générateur excède par une valeur prédéterminée le courant maximum prévu pour être normalement généré par l'électrode du générateur correspondant à la surface de cette plage, et/ou étant tels qu'ils évitent de dissiper brusquement dans cette plage l'énergie totale du générateur sans toutefois limiter de façon appréciable les courants normalement prévus pour être normalement générés par l'électrode du générateur correspondant à la surface de cette plage.

26. Procédé selon la revendication 25 caractérisé par le fait que le procédé de métallisation sous vide est choisi parmi les procédés de vaporisation thermochimique simple, ou assisté de type pulvérisation cathodique ou à faisceau d'électron.

27. Procédé selon la revendication 26, caractérisé par le fait que la métallisation possède une épaisseur variant entre 0,005 et 0,1 micron.

28. Procédé selon la revendication 25, caractérisé par le fait que la métallisation conductrice est constituée d'éléments compatibles avec le dépôt électrochimique, choisis parmi le cuivre, le nickel, le molybdène, le chrome, l'argent, l'or et leurs alliages, possède une résistance par surface carrée inférieure à 5 $\Omega$ et ne couvre pas toute la surface du support isolant de façon à laisser une marge latérale non-conductrice sur le bard opposé à celui de la marge conductrice.

29. Procédé selon l'une quelconque des revendications 25 à 28 caractérisé en ce que le dernier métal déposé électrochimiquement est du fer, du nickel ou du chrome.

30. Procédé selon l'une quelconque des revendications 25 à 28 caractérisé en ce que l'ablation d'une partie de la surface conductrice est faite par usinage laser, par étincellage ou encore par des procédés mécaniques ou chimiques.

**31.** Procédé selon l'une quelconque des revendications 25 à 28 caractérisé en ce que l'ablation est effectuée, par usinage laser ou étincellage, avant l'étape du dépôt électrochimique de façon à pouvoir définir rapidement la forme et les dimensions des plages, des ponts conducteurs, de la marge conductrice commune et, au besoin, des sections isolantes transversales sur toute la largeur du film support.

**32.** Procédé selon l'une quelconque des revendications 25 à 28, caractérisé en ce que l'ablation est effectuée après l'étape du dépôt électrochimique de façon à pouvoir définir la forme et les dimensions des plages, des ponts conducteurs, de la marge conductrice commune et, au besoin, des sections isolantes transversales sur toute la largeur du film support.

**33.** Procédé selon l'une quelconque des revendications 25 à 28, caractérisé en ce que la surface des plages individuelles est choisie de façon à représenter moins de 10 pourcent de la surface totale prévue pour le collecteur du générateur.

**34.** Procédé selon l'une quelconque des revendications 25 à 28, caractérisé en ce que la surface des plages individuelles est choisie de façon à représenter moins de 1 pourcent de la surface totale prévue pour le collecteur du générateur.

**35.** Procédé selon l'une quelconque des revendications 25 à 28, caractérisé en ce que le film support isolant est constitué de matières plastiques contenant du polypropylène, du polysulfone, du polyéthylène ou du polyesther de haute pureté, préalablement traité par décharge couronne sur la ou les surfaces, à être métallisées et choisies pour leur compatibilité chimique avec l'environnement chimique du générateur électrochimique fonctionnant avec des électrodes contenant des métaux alcalins.

**36.** Procédé selon la revendication 25 , caractérisé en ce qu'il comporte une étape additionnelle d'application d'un matériau d'électrode consistant en une anode ou une cathode du générateur de façon à constituer un ensemble électrode-collecteur adhérent; ledit matériau d'électrode n'étant toutefois pas appliqué sur la marge latérale non-conductrice ni sur le bord opposé du film support comportant les ponts conducteurs et la marge conductrice commune.

**37.** Procédé selon la revendication 36 , caractérisé en ce que le matériau d'électrode est appliqué par des procédés d'épandage par mise en solution, par voie fondue ou par transfert ou lamination d'un film déjà élaboré.

**38.** Procédé selon les revendications 35 ou 37, caractérisé en ce que le revêtement d'électrode ne couvre que les surfaces métallisées des plages conductrices.

**39.** Procédé de fabrication d'un générateur utilisant le procédé des revendications 25 ou 36, caractérisé en ce qu'une étape supplémentaire d'application d'un contact électrique est faite en ajoutant du zinc par *schoopage* sur au moins une extrémité latérale du générateur.

**Patentansprüche**

1. Stromkollektor mit seitlichem Kollektorabgriff für einen elektrochemischen Dünnfilm-Generator mit Polymer-Feststoffelektrolyt, welcher mit Alkali- oder Erdalkaliionen arbeitende Elektroden verwendet, umfassend die folgenden Elemente:

   - einen in Hinblick auf seine Verträglichkeit mit der chemischen Umgebung des Generators gewählten und in Hinblick auf Hafterfordernisse an wenigstens einer seiner Seiten behandelten isolierenden Kunststoff-Trägerfilm einer Dicke zwischen etwa 1 und 30 Mikron,
   - eine in Hinblick auf ihre Verträglichkeit mit dem Material der entsprechenden Elektrode des Generators gewählte leitende metallische Beschichtung einer Dicke von weniger als etwa 10 Mikron, welche an wenigstens einer Seite des isolierenden Trägerfilms anhaftet,

   dadurch gekennzeichnet, daß seine leitende Fläche in eine Mehrzahl verschiedener benachbarter Felder unterteilt ist, wobei jedes Feld durch nichtleitende Berandungen elektrisch isoliert ist, und zwar mit Ausnahme wenigstens einer leitenden Brücke geringen Querschnitts, welche mit einem gemeinsamen leitenden seitlichen Steg verbunden ist, was einen seitlichen Kollektorabgriff der Gesamtheit der verschiedenen Felder erlaubt, wobei die Beschaffenheit, die Geometrie und der elektrische Widerstand der leitenden Brücken derart gewählt sind, daß sie einerseits den Durchfluß von Strömen erlauben, welche Maximalströmen entsprechen, die für jedes der einzelnen Kollektorfelder des geplanten Generators vorgesehen sind, und andererseits im Falle eines zufälligen Kurzschlusses im Inneren eines Felds den durch dieses Feld empfangenen und von der Gesamtheit der Felder des Generators herrührenden Maximalstrom begrenzen, wobei die Leiterbrücken wie Sicherungen wirken, so daß sie sich irreversibel abtrennen, wenn der von dem Generator empfangene Strom den Maximalstrom um einen vorbestimmten Wert überschreitet, welcher Maximalstrom vorgesehen ist, durch die der Fläche dieses Felds entsprechende Elektrode des Generators normalerweise erzeugt zu werden, und/oder derart ausgebildet sind, daß sie das plötzliche Dissipieren der gesamten Energie des Generators in diesem Feld verhindern, ohne jedoch die Ströme nennenswert zu begrenzen, die normalerweise vorgesehen sind, normalerweise durch die der Fläche dieses Felds entsprechende Elektrode des Generators erzeugt zu werden.

2. Kollektor nach Anspruch 1, bei welchem die leitende metallische Beschichtung einen Teil des isolierenden Trägerfilms unbedeckt läßt, so daß ein seitlicher nichtleitender Steg definiert wird.

3. Kollektor nach Anspruch 1, bei welchem der isolierende Trägerfilm aus Kunstharzen gebildet ist, welche mit Elektroden verträglich sind, die auf Alkali- oder Erdalkalimetallen basieren.

4. Kollektor nach den Ansprüchen 1, 2 oder 3, bei welchem das Kunstharz aus Polypropylen, aus Polyethylen, aus Polyester oder aus Polysulfon gebildet ist.

5. Kollektor nach einem der Ansprüche 1 bis 3, bei welchem die metallische Beschichtung wenigstens an der Oberfläche aus Aluminium, aus Nickel, aus Chrom, aus Molybdän, aus Eisen, aus Gold, aus Silber oder deren Legierungen gebildet ist, wenn dieser Kollektor zur Verwendung als Kollektor einer Kathode eines Generators vorgesehen ist.

6. Kollektor nach Anspruch 1, bei welchem die metallische Beschichtung an der Oberfläche aus Nickel, aus Chrom, aus Eisen, aus Molybdän oder deren Legierungen gebildet ist, wenn dieser Kollektor zur Verwendung als Kollektor einer Anode eines Generators vorgesehen ist.

7. Kollektor nach Anspruch 6, bei welchem die metallische Beschichtung an der Oberfläche aus Nickel, aus Chrom, aus Eisen, aus Molybdän oder deren Legierungen gebildet ist, wenn dieser Kollektor zur Verwendung mit einer Elektrode aus metallischem Lithium vorgesehen ist.

8. Kollektor nach einem der Ansprüche 1, 2, 6 oder 7, bei welchem die Flächen der einzelnen Felder derart bestimmt sind, daß sie weniger als 10 Prozent der Gesamtfläche des vorgesehenen Generators bilden.

9. Kollektor nach einem der Ansprüche 1, 2, 6 oder 7, bei welchem die Flächen der einzelnen Felder derart bestimmt sind, daß sie weniger als 1 Prozent der Gesamtfläche des Generators bilden.

10. Kollektor nach einem der Ansprüche 1, 2, 6 oder 7, bei welchem die leitenden Felder im wesentlichen parallelepipedische Formen aufweisen.

11. Kollektor nach Anspruch 1, bei welchem die leitende metallische Beschichtung aus einem unter Vakuum metallisierten Metall gebildet ist.

12. Kollektor nach Anspruch 1, bei welchem das Metall aus Aluminium, Gold, Nickel, Chrom, Molybdän, Silber, Eisen und deren Legierungen gewählt ist.

13. Kollektor nach Anspruch 1, dadurch gekennzeichnet, daß die leitende metallische Beschichtung und der Flächenwiderstand der einzelnen Felder, des gemeinsamen leitenden Stegs und gegebenenfalls der leitenden Brücken durch ein unter Vakuum metallisiertes und aus Kupfer, Gold, Nickel, Chrom, Molybdän, Silber, Eisen und deren Legierungen gewähltes Metall mit einer Dicke zwischen 0,005 und 0,1 Mikron sowie durch wenigstens ein elektrochemisch derart abgelagertes Metall bestimmt ist, daß man eine abgelagerte Dicke von 0,1 bis 4 Mikron erhält, von denen das letztere abgelagerte Metall in Hinblick auf seine Verträglichkeit mit dem Material der entsprechenden Elektrode für den Generator gewählt ist.

14. Kollektor nach Anspruch 13, dadurch gekennzeichnet, daß die Abmessungen und die Geometrie der einzelnen Felder, der leitenden Brücken und gegebenenfalls des seitlichen isolierenden Stegs und der querverlaufenden nichtleitenden Bereiche durch lokale Demetallisierung eines Teils der metallisierten oder metallplattierten Fläche bestimmt sind.

15. Kollektor nach Anspruch 14, dadurch gekennzeichnet, daß die Demetallisierung durch Ablation mit einem Laserstrahl oder durch Funkenerosion bewirkt ist.

16. Kollektor nach Anspruch 1, bei welchem die zwischen den benachbarten Feldern vorgesehenen querverlaufenden isolierenden Bereiche gleichfalls den gemeinsamen leitenden seitlichen Steg unterbrechen, so daß sie die leitenden Felder oder die Gruppen leitender Felder, die Leiterbrücke oder ihre Leiterbrücken sowie den Bereich des entsprechenden leitenden Stegs voneinander isolieren.

17. Kollektor nach Anspruch 13, bei welchem die isolierenden Bereiche zwischen den benachbarten Feldern weniger als 10 % der Fläche der Felder bilden.

18. Kollektor-Elektrode-Anordnung, welche einen Kollektor nach Anspruch 1 verwendet, deren Elektrodenmaterialfilm aus einer Verbundanode oder einer Verbundkathode gebildet ist, welche über den Elektrolyt des Generators verbunden ist, welcher die leitenden Felder und die zwischen den Feldern angeordneten isolierenden Berandungen des Trägerfilms mit Ausnahme einerseits eines Teils des isolierenden seitlichen Stegs und andererseits einer seitlichen Berandung bedeckt, welche aus den leitenden Brücken und aus dem gemeinsamen leitenden Steg gebildet ist.

19. Kollektor-Elektrode-Anordnung nach Anspruch 18, deren Verbundelektrodenmaterial durch Verfahren zum Ausbringen in Lösungsform oder als geschmolzenes Erzeugnis oder auch durch Verfahren zur Übertragung oder zur Laminierung eines Films, welcher an einer bereits gefertigten Elektrode anhaftet, gewonnen ist.

20. Kollektor-Elektrode-Anordnung nach Anspruch 18, deren Elektrodenmaterialfilm nur auf den Flächen der verschiedenen leitenden Felder des Kollektors vorhanden ist, so daß die die benachbarten Felder trennenden nichtleitenden Berandungen nicht bedeckt sind, damit im Falle eines inneren Kurzschlusses eines Felds und der irreversibelen Unterbrechung der leitenden Brücken das defekte Feld von der Generatoreinheit elektrisch vollkommen isoliert ist.

21. Kollektor-Elektrode-Anordnung nach Anspruch 20, bei welcher der Elektrodenmaterialfilm aus Lithium oder eine metallische Anode ist.

22. Kollektor-Elektrode-Anordnung nach Anspruch 21, bei welcher der Elektrodenfilm durch Extrusion, Pressbearbeitung oder Laminierung eines vorgefertigten Films oder durch Verfahren zum Aufbringen von geschmolzenem Lithium gewonnen ist.

23. Kollektor-Elektrode-Anordnung nach einem der Ansprüche 18 bis 22, welche unter Verwendung des Kollektors nach Anspruch 16 gebildet ist und welche in einer großen Anordnung dünner aufgerollter Zellen enthalten ist und vorübergehend sicherheitsaufbewahrt ist in Form einer großen Hülse, deren seitliche Kontaktanschlüsse noch nicht an dem leitenden Steg der Anordnung angelegt sind.

24. Polymerelektrolytgenerator in Form eines dünnen Films, welcher aus einer Anordnung aneinanderhaftender Filme gebildet ist und in gerollter oder gestapelter Form zusammengefügt ist, umfassend wenigstens einen der Kollektoren nach einem der Ansprüche 1, 2, 6, oder 7 oder eine der Kollektor-Elektrode-Anordnungen nach einem der Ansprüche 18 bis 23.

25. Verfahren zur Herstellung eines Stromkollektors für einen elektrochemischen Dünnfilm-Generator mit Polymerelektrolyt und seitlichem Kollektorabgriff, welcher mit Alkali- oder Erdalkaliionen arbeitende Elektroden verwendet, umfassend die drei folgenden Schritte:

- Metallisierung durch Vakuumablagerung der gesamten oder eines Teils der Oberfläche wenigstens einer Seite eines isolierenden Trägerfilms einer Dicke zwischen 1 und 30 Mikron mit einem Metall, welches in Hinblick auf die Förderung einer elektrochemischen Ablagerung gewählt ist und eine ausreichende elektrische Leitfähigkeit aufweist, um das Einleiten einer späteren elektrochemischen Ablagerung zu erlauben,

- elektrochemische Ablagerung wenigstens eines zusätzlichen Metalls einer Gesamtdicke zwischen 0,1 und 4 Mikron auf der gesamten oder auf einem Teil der metallisierten Oberfläche derart, daß der elektrische Widerstand der Fläche des Kollektors auf ein ausreichendes Maß vermindert wird, um widerstandsbedingte Verluste in diesem zu vermeiden, wobei das abgelagerte letztere Metall in Hinblick auf seine Verträglichkeit mit dem Material der entsprechenden Elektrode dieses Kollektors gewählt ist,

- lokale Ablation eines mehr oder weniger wesentlichen Teils der leitenden getragenen Fläche derart, daß die Fläche in leitende verschiedene benachbarte Felder unterteilt wird, welche untereinander mittels eines gemeinsamen leitenden seitlichen Stegs verbunden sind, wobei der elektrische Kontakt zwischen den verschiedenen Feldern und dem leitenden Steg durch eine oder mehrere elektrische Brücken geringen Querschnitts sichergestellt ist, wobei die Geometrie und der elektrische Widerstand der leitenden Brücke oder der leitenden Brükken derart gewählt sind, daß sie einerseits den Durchfluß von Strömen erlauben, welche Normal-Maximalströmen entsprechen, die für jedes der Felder des Generators vorgesehen sind, und andererseits im Falle eines inneren Kurzschlusses im Inneren eines Felds den durch dieses Feld empfangenen und von der Gesamtheit der Fläche des Generators über den Weg des gemeinsamen leitenden Stegs herrührenden Maximalstrom zu begrenzen oder zu unterbrechen, wobei die leitenden Brücken wie Sicherungen wirken, so daß sie sich irreversibel unterbrechen, wenn der von dem Generator empfangene Strom den Maximalstrom um einen vorbestimmten Wert überschreitet, welcher Maximalstrom vorgesehen ist, durch die der Fläche dieses Felds entsprechende Elektrode des Generators normalerweise erzeugt zu werden, und/oder derart ausgebildet sind, daß sie das plötzliche Dissipieren der gesamten Energie des Generators in diesem Feld verhindern, ohne jedoch die Ströme nennenswert zu begrenzen, die normalerweise vorgesehen sind, normalerweise durch die der Fläche dieses Felds entsprechende Elektrode des Generators erzeugt zu werden.

26. Verfahren nach Anspruch 25, dadurch gekennzeichnet, daß das Vakuum-Metallisierungsverfahren aus den Verfahren der einfachen oder unterstützen thermochemischen Verdampfung nach Art der Kathoden- oder Elektronenstrahlzerstäubung gewählt wird.

27. Verfahren nach Anspruch 26, dadurch gekennzeichnet, daß die Metallisierung eine zwischen 0,005 und 0,1 Mikron variable Dicke aufweist.

28. Verfahren nach Anspruch 25, dadurch gekennzeichnet, daß die leitende Metallisierung aus Elementen gebildet ist, welche mit der elektrochemischen Ablagerung verträglich sind und welche aus Kupfer, Nickel, Molybdän, Chrom, Silber, Gold und deren Legierungen gewählt sind, einen Widerstand pro Flächeneinheit von weniger als 5 $\Omega$ aufweist und nicht die gesamte Fläche des isolierenden Trägers bedeckt, so daß ein nichtleitender seitlicher Steg an dem dem leitenden Steg entgegengesetzten Rand belassen wird.

29. Verfahren nach einem der Ansprüche 25 bis 28, dadurch gekennzeichnet, daß das letztere elektrochemisch abgelagerte Metall Eisen, Nickel oder Chrom ist.

30. Verfahren nach einem der Ansprüche 25 bis 28, dadurch gekennzeichnet, daß die Ablation eines Teils der leitenden Fläche durch Laserbearbeitung, durch Funkenerosion oder auch durch mechanische oder chemische Verfahren durchgeführt wird.

31. Verfahren nach einem der Ansprüche 25 bis 28, dadurch gekennzeichnet, daß die Ablation durch Laserbearbeitung oder durch Funkenerosion vor dem Schritt der elektrochemischen Ablagerung durchgeführt wird, so daß man die Form und die Abmessungen der Felder, der leitenden Brücken, des gemeinsamen leitenden Stegs und gegebenenfalls der querverlaufenden isolierenden Bereiche auf der gesamten Breite des Trägerfilms schnell definieren kann.

32. Verfahren nach einem der Ansprüche 25 bis 28, dadurch gekennzeichnet, daß die Ablation nach dem Schritt der elektrochemischen Ablagerung durchgeführt wird, so daß man die Form und die Abmessungen der Felder, der leitenden Brücken, des gemeinsamen leitenden Stegs und gegebenenfalls der querverlaufenden isolierenden Bereiche auf der gesamten Breite des Trägerfilms definieren kann.

33. Verfahren nach einem der Ansprüche 25 bis 28, dadurch gekennzeichnet, daß die Fläche der einzelnen Felder derart gewählt wird, daß sie weniger als 10 Prozent der für den Kollektor des Generators vorgesehenen Gesamtfläche bildet.

34. Verfahren nach einem der Ansprüche 25 bis 28, dadurch gekennzeichnet, daß die Fläche der einzelnen Felder derart gewählt wird, daß sie weniger als 1 Prozent der für den Kollektor des Generators vorgesehenen Gesamtfläche bildet.

35. Verfahren nach einem der Ansprüche 25 bis 28, dadurch gekennzeichnet, daß der isolierende Trägerfilm aus Kunststoffmaterialien gebildet wird, welche Polypropylen, Polysulfon, Polyethylen, oder Polyester großer Reinheit enthalten, und zuvor auf der zu metallisierenden Fläche oder den zu metallisierenden Flächen mittels Koronaentladung behandelt wurde, und welche in Hinblick auf ihre chemische Verträglichkeit mit der chemischen Umgebung des elektrochemischen Generators, der mit Alkalimetalle enthaltenden Elektroden arbeitet, gewählt werden.

36. Verfahren nach Anspruch 25, dadurch gekennzeichnet, daß es einen zusätzlichen Schritt zum Anbringen eines Elektrodenmaterials umfaßt, welches eine Anode oder Kathode des Generators bildet, so daß eine aneinanderhaftende Kollektor-Elektrode-Anordnung gebildet wird, wobei das Elektrodenmaterial jedoch weder auf dem seitlichen nichtleitenden Steg noch auf dem entgegengesetzten Rand des Trägerfilms angebracht ist, welcher die leitenden Brücken und den gemeinsamen leitenden Steg umfaßt.

37. Verfahren nach Anspruch 36, dadurch gekennzeichnet, daß das Elektrodenmaterial durch Verfahren zum Ausbringen durch Auflösen, durch Schmelzen oder durch Übertragung oder Laminierung eines bereits vorgefertigten Films angebracht wird.

38. Verfahren nach Anspruch 36 oder 37, dadurch gekennzeichnet, daß der Elektrodenüberzug nur die metallisierten Flächen der leitenden Felder bedeckt.

39. Verfahren zur Herstellung eines Generators unter Verwendung des Verfahrens nach den Ansprüchen 25 oder 36, dadurch gekennzeichnet, daß ein zusätzlicher Schritt zum Anbringen eines elektrischen Kontakts ausgeführt wird, indem Zink durch ein Schoop-Verfahren auf wenigstens einem seitlichen Ende des Generators angebracht wird.

## Claims

1. A side-collection current collector for a thin-film electrochemical cell having a polymer solid electrolyte and using electrodes operating relative to alkali or alkaline-earth ions, said collector comprising the following elements:

an insulating plastics support film of thickness lying in the range 1 micron to 30 microns approximately, chosen to be compatible with the chemical environment of the cell, and treated if necessary to be adhesive on at least one of its faces;
a conductive metal coating of thickness less than about 10 microns adhering to at least one face of the insulating support film, the coating being chosen to be compatible with the material of the corresponding electrode of the cell, and characterized in that its conductive surface is subdivided into a multitude of adjacent distinct regions, each region being electrically insulated by non-conductive edging with the exception of at least one small-section conductive bridge connected to a conductive common side margin enabling current to be collected from the side from all of the distinct regions; the type, the geometrical shape, and the electrical resistance of the conductive bridges being chosen firstly so as to enable currents to pass that correspond to the maximum rated current of each of the individual collection regions of the final cell, and secondly, in the event of accidental short-circuiting within a region, so as to limit the maximum current received by said region from all of the regions of the cell, said conductive bridges acting like fuses so as to break irreversibly when the current received from the cell exceeds by a predetermined value the maximum rated current that is normally supplied by the electrode of the cell corresponding to the area of said region, and/or being such that they avoid suddenly dissipating the total energy from the cell into said region, without however noticeably limiting the normal rated currents normally supplied by the electrode of the cell corresponding to the area of said region.

2. A collector according to claim 1, in which the conductive metal coating leaves a portion of the insulating support film exposed so as to define a nonconductive side margin.

3. A collector according to claim 1, in which the insulating support film is made of synthetic resins that are compatible with the electrodes based on alkali or alkaline-earth metals.

4. A collector according to claim 1, 2, or 3, in which the synthetic resin is constituted by polypropylene, polyethylene, polyester, or polysulfone.

5. A collector according to any one of claims 1 to 3, in which the metal coating is made, at least at its surface, of aluminum, of nickel, of chromium, of molybdenum, of iron, of gold, of silver, or of their alloys, when the collector is to be used as a collector of a cathode of a cell.

6. A collector according to claim 1, in which the metal coating is made, at its surface, of nickel, of chromium, of iron, of molybdenum, or of their alloys, when the collector is to be used as a collector of an anode of a cell.

7. A collector according to claim 6, in which the metal coating is made, at its surface, of nickel, of chromium, of iron, of molybdenum, or of their alloys, when the collector is to be used with a metallic lithium electrode.

8. A collector according to any one of claims 1, 2, 6, and 7, for which the surface areas of the individual regions are determined so as to represent less than 10 percent of the total surface area of the final cell.

9. A collector according to any one of claims 1, 2, 6, and 7, for which the surface areas of the individual regions are determined so as to represent less than 1 percent of the total surface area of the cell.

10. A collector according to any one of claims 1, 2, 6, and 7, in which the conductive regions are substantially rectangular in shape.

11. A collector according to claim 1, in which the conductive metal coating is constituted by a vacuum-plated metal.

12. A collector according to claim 1, in which the metal is chosen from aluminum, gold, nickel, chromium, molybdenum, silver, iron, and their alloys.

13. A collector according to claim 1, characterized in that the conductive metal coating and the surface resistance of the individual regions, of the common conductive margin, and, where necessary, of the conductive bridges are determined by means of a vacuum-plated metal that is chosen from copper, gold, nickel, chromium, molybdenum, silver, iron, and their alloys, of thickness lying in the range 0.005 microns to 0.1 microns, and, by means of at least one metal that is electrochemically deposited so as to obtain a deposited thickness lying in the range 0.1 microns to 4 microns, in which the last-deposited metal is chosen to be compatible with the electrode material corresponding to the cell.

14. A collector according to claim 13, characterized in that the dimensions and the geometrical shape of the individual regions, of the conductive bridges and, where necessary, of the insulating side margin and of the non-conductive transversely extending sections are determined by locally stripping the metal coating from a portion of the metal-coated surface area.

15. A collector according to claim 14, characterized in that the metal-stripping is performed by laser-beam ablation, or by electron discharge machining.

16. A collector according to claim 1, in which insulating transversely extending sections provided between the adjacent regions also interrupt the conductive common side margin so as to insulate from one another the conductive regions or sets of conductive regions, their conductive bridges, and the corresponding sections of the conductive margin.

17. A collector according to claim 13, in which the insulating sections between the adjacent regions represent less than 10% of the surface area of the regions.

18. An electrode-and-collector unit using a collector according to claim 1, in which unit the film of the electrode material is constituted by a composite anode or cathode bonded by means of the electrolyte of the cell that covers the conductive regions and the insulating edging of the support film located between regions, with the exception firstly of a portion of the insulating side margin, and secondly of side edging constituted by conductive bridges and by the common conductive margin.

19. An electrode-and-collector unit according to claim 18, in which the composite electrode material is obtained by spreading it in the form of a solution or of a melt, or by transferring or laminating an adhesive film from an already made electrode.

20. An electrode-and-collector unit according to claim 18, in which the film of electrode material is present only on the surfaces of the distinct conductive regions of the collector, so that the non-conductive edging separating the adjacent regions is not covered, so that, in the event of a short-circuit occurring within a region and of the conductive bridges breaking irreversibly, the defective region is fully electrically isolated from the cell as a whole.

21. An electrode-and-collector unit according to claim 20, in which the film of electrode material is made of lithium or of a metal anode.

22. An electrode-and-collector unit according to claim 21, in which unit the electrode film is obtained by extruding, pressing or rolling a pre-shaped film, or by applying molten lithium.

23. An electrode-and-collector unit according to any one of claims 18 to 22, made by using the collector according to claim 16, and present in a wide set of thin batteries wound and temporarily stored safely on a wide reel whose side contact terminals are not yet applied against the conductive margin of said set.

24. A polymer electrolyte cell in the form of a thin film formed of a set of adhesive films assembled together in wound or stacked form, the cell including at least one of the collectors according to any one of claims 1, 2, 6, and 7, or an electrode-and-collector unit according to any one of claims 18 to 23.

25. A method of preparing a current collector for a thin-film electrochemical cell having a polymer electrolyte and using electrodes operating relative to alkali or alkaline-earth ions, the collector providing side collection, said method comprising the following three steps:

metal plating, by vacuum plating, of all or a portion of the surface of at least one face of an insulating support film, of thickness lying in the range 1 micron to 30 microns, with a metal chosen to facilitate electrochemical deposition, and having electron conductivity that is high enough to enable subsequent electrochemical deposition to be primed;
electrochemical deposition of at least one additional metal, of total thickness lying in the range 0.1 microns to 4 microns, over all or a portion of the metal-plated surface so as to reduce the surface electrical resistance of the collector to a level sufficient to avoid losses by resistivity therein, the last-deposited metal being chosen to be compatible with the material of the electrode corresponding to the collector; and
local ablation of a portion, whose size may be varied, of the supported conductive surface so as to subdivide the surface into adjacent distinct conductive regions connected together by means of a common conductive side margin, the electrical contact between the distinct regions and the conductive margin being provided by one or more electrical bridges of small section, the geometrical shape and the electrical resistance of the conductive bridges being chosen firstly so as to enable currents to pass that correspond to the maximum rated currents for each of the individual regions of the cell, and secondly, in the event of short-circuiting within a region, so as to limit or interrupt the maximum current received by said region from the entire area of the cell via the common conductive margin, said conductive bridges acting like fuses so as to break irreversibly when the current received from the cell exceeds by a predetermined value the maximum rated current that is normally supplied by the electrode of the cell corresponding to the area of said region, and/ or being such that they avoid suddenly dissipating the total energy from the cell into said region, without however noticeably limiting the normal rated currents normally supplied by the electrode of the cell corresponding to the area of said region.

26. A method according to claim 25, characterized by the fact that the vacuum plating method for performing the metal plating is chosen from thermochemical vaporization methods on their own, or assisted and of the cathode sputtering or electron beam type.

27. A method according to claim 26, characterized by the fact that the metal plating has a thickness in the range 0.005 microns to 0.1 microns.

28. A method according to claim 25, characterized by the fact that the conductive metal plating is constituted by elements compatible with electrochemical deposition and chosen from copper, nickel, molybdenum, chromium, silver, gold, or their alloys, has surface resistance per square of less than $5\,\Omega$, and does not cover the entire surface of the insulating support, so as to leave a non-conductive side margin on the edge opposite from the conductive margin.

29. A method according to any one of claims 25 to 28, characterized in that the last metal electrochemically deposited is iron, nickel, or chromium.

30. A method according to any one of claims 25 to 28, characterized in that the ablation of a portion of the conductive surface is performed by laser machining, electron discharge machining, or by mechanical or chemical methods.

31. A method according to any one of claims 25 to 28, characterized in that the ablation is performed by laser machining or by electron discharge machining, prior to the electrochemical deposition step so as to make it possible to define rapidly the shapes and dimensions of the regions, of the conductive bridges, of the common conductive margin, and, where necessary, the transversely extending insulating sections extending over the entire width of the support film.

32. A method according to any one of claims 25 to 28, characterized in that the ablation is performed after the electrochemical deposition step so as to make it possible to define the shapes and the dimensions of the regions, of the conductive bridges, of the common conductive margin and, where necessary, of the transversely extending insulating sections extending over the entire width of the support film.

33. A method according to any one of claims 25 to 28, characterized in that the surface area of the individual regions is chosen so as to represent less than 10 percent of the final total surface area of the collector of the cell.

34. A method according to any one of claims 25 to 28, characterized in that the surface area of the individual regions is chosen so as to represent less than 1 percent of the final total surface area of the collector of the cell.

35. A method according to any one of claims 25 to 28, characterized in that the insulating support film is made of plastics materials containing polypropylene, polysulfone, polyethylene or high-purity polyester, pre-treated by corona discharge on the surface(s) to be metal plated, and chosen to be chemically compatible with the chemical environment of the electrochemical cell operating with electrodes containing alkali metals.

36. A method according to claim 25, characterized in that it includes an additional step in which an electrode material consisting of an anode or a cathode of the cell is applied so as to constitute an adhesive electrode-and-collector unit, said electrode material not however being applied on the non-conductive side margin, or on the opposite edge of the support film including the conductive bridges and the common conductive margin.

37. A method according to claim 36, characterized in that the electrode material is applied by spreading it in solution form or in molten form, or by transfer or lamination of an already made film.

38. A method according to claim 36 or 37, characterized in that the electrode covering covers only the metal-plated surfaces of the conductive regions.

39. A method of manufacturing a cell using the method of claim 25 or 36, characterized in that an additional step is performed in which an electrical contact is applied by adding zinc by using the Schoop process on at least one side end of the cell.

Fig. 1a.

Fig. 1b

Fig. 2a

Fig. 2c

Fig. 2b

FIGURE 3

# FIGURE 4